# EUROPEAN PATENT SPECIFICATION

(11) **EP 2 758 164 B1**
(45) Date of publication and mention of the grant of the patent: **09.03.2016**
(21) Application number: 12780259.3
(22) Date of filing: 20.09.2012
(51) Int. Cl.: B01J 20/26, B01J 19/12, C08F 293/00, C08F 2/46, C08F 2/48

(54) **PHOTOREACTOR AND PROCESS FOR PREPARING MIP NANOPARTICLES**
FOTOREAKTOR UND VERFAHREN ZUR HERSTELLUNG VON MIP-NANOPARTIKELN
PHOTORÉACTEUR ET PROCÉDÉ DE PRÉPARATION DE NANOPARTICULES MIP

(30) Priority: 21.09.2011 GB 201116312
(43) Date of publication of application: 30.07.2014
(73) Proprietor: The University of Leicester, Leicester LE1 7RH (GB)
(72) Inventor: PILETSKY, Sergey, Cranfield Bedfordshire MK43 0EE (GB); PILETSKA, Olena, Cranfield Bedfordshire MK43 0EE (GB); GUERREIRO, Antonio, Cranfield Bedfordshire MK43 0HL (GB); WHITCOMBE, Michael, Norwich Norfolk NR9 5EW (GB); POMA, Alessandro, Bedford Bedfordshire MK40 1TH (GB)
(74) Representative: Bailey, Sam Rogerson
(86) International application number: PCT/GB2012/052318
(87) International publication number: WO 2013/041861

(56) References cited:
- WO-A1-01/32760
- WO-A1-2006/129088
- WO-A1-2010/092071
- WO-A1-2011/067563
- WO-A2-2010/081076

## Description

**Technical Field.** The present invention relates to novel processes for producing nanoparticles made of molecularly imprinted polymers.

### Background Art

The term "template-directed synthesis" includes the formation of a new substance by chemical modification of a substrate, or by the coupling of two or more molecules, in the presence of a template which serves as a pattern for new structure formation. A specific example is "molecular imprinting", based on the polymerisation of vinyl or acrylic monomers in the presence of a template or templates (see ref. 1, 2). The traditional approach involves the production of highly cross-linked imprinted polymers, which are insoluble in aqueous and organic solvents. Because of their inherent insolubility, the possibility to use molecularly imprinted polymers (MIPs) in pharmacology and medicine is restricted. Recently, several attempts have been made to develop protocols for the preparation of imprinted polymers with relatively low-molecular weights which could exist in soluble or at least colloidal forms. This format will allow polymers to be used as biologically active molecules (drugs, effectors, modulators, inhibitors) in pharmacology and medicine, and as "plastic antibodies", replacing biological molecules in sensors and in affinity separation and as catalysts with enzyme-like properties.

One way to synthesise soluble MIPs is by controlled polymerisation. Controlled polymerisation is defined here as a process which leads to the formation of fractions of soluble polymers with relatively narrow distribution of molecular sizes. Typical examples of controlled polymerisation employ living polymerisation, as described below.

The living, free-radical polymerisation techniques, such as iniferter polymerisation, nitroxide-mediated radical polymerisation, atom-transfer radical polymerisation (ATRP) and reversible addition-fragmentation chain-transfer (RAFT) polymerisation, open new routes for the synthesis of polymers with relatively controlled molecular weights (see ref. 3-9). Controlled/living polymerisation techniques are based on a delicate balance between dormant and active species that effectively reduces the concentration of propagating entities in the system and minimizes the extent of termination. Living polymerisation could be free of side reactions such as termination and chain transfer and thus can generate polymers with well defined molecular weight distributions and structures. The same approach can be applied to the formation of copolymers, thus making it possible to produce block copolymers by free radical polymerisation by proper sequencing of the monomer additions. Living polymerisation has been used previously in the production of bulk grafted MIPs (see ref. 10, 11). Soluble polymers were also produced by living polymerisation and used later in MIP production (see ref. 12). Recently, controlled living polymerisation was used for the preparation of MIP nanoparticles (13).

One of the complications in MIP synthesis is the frequent need to use templates which are expensive and/or difficult to obtain, such as proteins, some toxins etc. Such templates are also difficult to recover after polymerisation and limit the amount of MIP that can be obtained. Ideally the template should be capable of being re-used to overcome these limitations. The optimal way to achieve this is by using the template in an immobilised form. Immobilised template has been used previously (see US 7393909). Here the template was immobilised onto a silica surface and then polymer was formed in pores around it. By dissolving the silica support and removal of the template, MIPs of various morphologies were obtained. In all of the examples disclosed in US 7393909, the surface bearing the immobilised template is lost during the dissolution process and cannot be re-used. In other examples immobilised templates were used for the production of imprinted surfaces (US 6127154; US 6458599; US 7288415). Potentially the template-bearing surfaces disclosed in these reports can be regenerated and used several more times. These approaches can be used for the production of sensors or arrays, but would be difficult to adapt for the production of nanoparticles or small soluble molecules.

Yet another major problem associated with MIPs is heterogeneity of the binding sites produced, which is generally responsible for high levels of non-specific binding. This problem has been solved by affinity separation of MIP nanoparticles on a column bearing an immobilised target species or template after their production (13). It is clear that in order for affinity separation to be possible, MIPs should be in a suitable form, preferably in the form of nanoparticles.

A recent invention addresses the problems relating to the development of high performance cross-linked MIP nanoparticles by disclosing a combination of two techniques: (i) performing controlled polymerisation, optionally controlled radical polymerisation, in the presence of a surface or surfaces bearing immobilised template to form imprinted nanoparticles and (ii) retaining the nanoparticles by affinity interaction with immobilised template for selection and purification purposes. Thus our earlier application WO 2011/067563 discloses a process for the preparation of a molecularly imprinted polymer ("MIP") in the form of a solution or colloidal suspension of MIP particles, comprising the steps of:
(a) providing a carrier substance having a template material immobilised on it so as to be exposed at a surface;
(b) providing a polymerisable composition in contact with said surface;
(c) effecting controlled polymerisation of said polymerisable composition in contact with said surface, preferably by a living radical polymerisation process, said polymerisation being terminated when MIP particles capable of forming a solution or colloidal suspension have been formed; and
(d) separating said MIP particles from said surface. This may be followed by a purification step (e) in which (i) a solution or suspension containing said separated MIP particles is contacted with a carrier substance having said template material immobilised on it so as to be exposed at a surface, so that said MIP particles bind to said immobilised template material, (ii) unbound material is separated from said carrier substance; and subsequently (iii) MIP particles are recovered from the immobilised template material to form a purified solution or colloidal suspension.

Background material can be found in the following references.
1. Wulff, G. Makromol. Chem. Macromol. Symp., 1993, 70/71, 285.
2. Vlatakis, G.; et al. Nature, 1993, 361, 645.
3. Moad, G.; Rizzardo E.; Solomon, D.H. Macromolecules 1982, 15, 909;
4. Matyjaszewski, K.; Xia, J. Chem. Rev. 2001, 101, 2921.
5. Kamigaito, M.; Ando, T.; Sawamoto, M. Chem. Rev. 2001, 101, 3689*.*
6. Hawker, C. J.; Bosman, A. W.; Harth, E. Chem. Rev. 2001, 101, 3661.
7. Fischer, H. Chem. Rev. 2001, 101, 3581.
8. Otsu, T.; Matsumoto, A. Adv. Polym. Sci. 1998, 136, 75-137.
9. Moad, G.; et al. Polym. Int. 2000, 49, 993-1001.
10. Ruckert, B.; Hall, A. J.; Sellergren B. J. Mater. Sci. 2002, 12, 2275.
11. Hattori, K.; et al. J. Membr. Sci. 2004, 233, 169.
12. Li, Z.; Day, M.; Ding, J. F.; Faid, K. Macromolecules. 2005, 38, 2620.
13. Guerreiro A. R., Chianella I., Piletska E., Whitcombe M. J., Piletsky S. A. (2009). Biosens. Bioelectron., 24, 2740-2743.
14. Jagur-Grodzinski, J. Reactive & Functional Polymers. 2001, 1, 1.
15. Shim, S.E. et al. Macromolecules. 2003, 36, 7994-8000.
16. Yu, Q.; Zeng, F.; Zhu S. Macromolecules. 2005, 34, 1612.

**Patents cited**

| Patent number | Territory | Issue date | Title |
|---|---|---|---|
| US6,852,818 | US | 08-Feb-2005 | MOLECULARLY IMPRINTED POLYMERS PRODUCED BY TEMPLATE POLYMERIZATION |
| US6,127,154 | US | 03-Oct-2000 | METHODS FOR DIRECT SYNTHESIS OF COMPOUNDS HAVING COMPLEMENTARY STRUCTURE TO A DESIRED MOLECULAR ENTITY AND USE THEREOF |
| WO96/40822 | PCT | 19-Dec-1996 | PREPARATION OF BIOLOGICALLY ACTIVE MOLECULES BY MOLECULAR IMPRINTING |
| US5,630,978 | US | 20-May-1997 | PREPARATION OF BIOLOGICALLY ACTIVE MOLECULES BY MOLECULAR IMPRINTING |
| US7,393, 909 | US | 01-Jul-2008 | POROUS, MOLECULARLY IMPRINTED POLYMER AND A PROCESS FOR THE PREPARATION THEREOF |
| US6,458,599 | US | 01-Oct-2002 | COMPOSITIONS AND METHODS FOR CAPTURING ISOLATING DETECTING ANALYZING AND QUANTIFYING MACROMOLECULES |
| US7,288,415 | | 30-Oct-2007 | COMPOSITIONS AND METHODS FOR CAPTURING ISOLATING DETECTING ANALYZING AND QUANTIFYING MACROMOLECULES |
| WO2011/067563 | PCT | 9-June-2011 | PREPARATION OF MOLECULARLY IMPRINTED POLYMERS |

Disclosure of Invention. The present invention provides a process for producing nanoparticles of molecularly imprinted polymers comprising:
(i) immobilising a template species on a solid support to provide a supported template material;
(ii) locating the supported template material in a reaction vessel having one or more flow inlets, one or more flow outlets, a cooler/heater adapted to affect the temperature of the vessel's contents, and a radiation source adapted to irradiate the vessel's interior;
(iii) passing a polymerisable composition into the vessel through one or more of said flow inlets;
(iv) causing the radiation source to irradiate the vessel's interior to effect controlled polymerisation of the polymerisable composition, while using the cooler/heater to control the temperature thereof;
(v) ceasing irradiation at a stage when polymerisation has generated nanoparticles with molecular weights in the range 500-1,000,000 Da, at least some of the nanoparticles being bound to the immobilised template;
(vi) passing solvent through the vessel via one or more of said inlets and one or more of said outlets to wash out unreacted components of the polymerisable composition and unbound polymers; and
(vii) passing solvent through the vessel via one or more of said inlets and one or more of said outlets under conditions such that at least some of said bound nanoparticles are separated from the immobilised template and passed out of the vessel to a collection vessel, said conditions comprising one or more of increased temperature produced by the cooler/heater, and use of a solvent composition that is able to disrupt binding of nanoparticles to template.

The process may employ a photoreactor with a thermostatically-controlled reaction vessel containing immobilised template, lamps to irradiate said vessel and a fluidic system for delivering monomer mixture and collection of the synthesised nanoparticles, preferably where the operation of the equipment is performed under computer control.

We have found that the careful control of reaction parameters is crucial to the successful and consistent production of useful nanoparticulate MIPs.

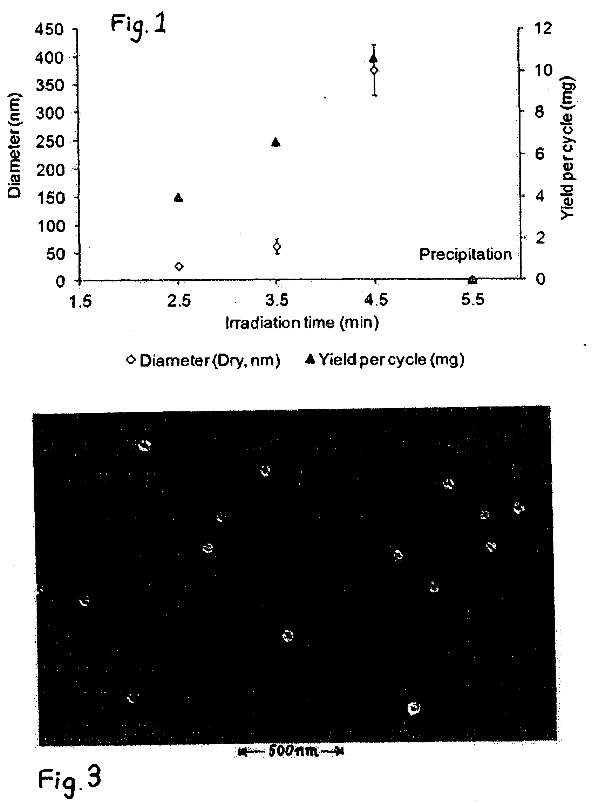

Firstly we have found that careful control of irradiation time is vital. Fig. 1 shows some experimental results, showing how radiation time affects (a) diameter of the product particles, and (b) yield. Whereas the yield rises fairly constantly with time, the diameter increases quite slowly at first, to a value of about 60 nm at 3.5 minutes, and then rises very rapidly to about 375 nm at 4.5 minutes. Since we have also found that the affinity of MIP nanoparticles peaks at about 60 nm, it is clear that the accurate control of parameters is critical for achieving a practical manufacturing process.

In one aspect of the proposed invention the MIPs are produced in the photoreactor in the presence of an immobilised template using controlled polymerisation, optionally controlled radical photochemical polymerisation. The preferred type of the reaction explored in the present invention is iniferter-based living radical polymerisation, initiated and controlled by UV irradiation. The polymerisation reaction is terminated at a stage when the size of the synthesised molecules is relatively small. The product of such a process exists either in soluble or stable colloidal form in solution or suspension. The colloidal suspensions or solutions of MIPs according to this invention may be in either aqueous or organic liquids.

The light initiates radical formation and propagation of the polymerisation reaction. The light energy utilized in the present invention is ultraviolet ("UV") light or visible light. However, the light energy can also be broad-band, delivered by fiber optic cable or by the way of an attenuated total reflectance (ATR) link.

In further aspect of the present invention high affinity particles can be selectively bound to (and later recovered from) surfaces bearing immobilised template, allowing them to be separated from low affinity particles. The surfaces bearing immobilised template can be the same surfaces which are used in the photoreactor vessel or they can be separate surfaces (e.g. contained within a separate column) with immobilised target, which may be an analogue of, or identical to, the template. The surfaces mentioned here can be surfaces of affinity columns, beads, fibres, wells, microplates, membranes, filters, pits, nanostructures, vesicles, capsules, samples of tissues, living cells etc. The surface can be solid, semi-solid or liquid or fluid (as in the case of micelles or interfaces). Optionally the particles can be further screened using an additional column or columns, to select a subfraction of the particles which do not possess affinity for a potential interferent compound, alternatively a similar approach can be employed to select subfraction(s) of particles which additionally have affinity to one or more analogues of the template in order to produce "class-selective" binders.

The further aspect of the present invention describes an application of the synthesised MIP nanoparticles. Molecules synthesised as described in this invention (dimers, oligomers, polymers, or their mixtures) can be used as drugs in pharmacology and medicine, as receptor-specific ligands in analytical chemistry (sensors, assays), for separation in the biotechnology, pharmaceutical and food industries and as catalysts in synthesis or as replacements for enzymes in assays, sensors and other applications such as washing powders.

### Brief Description of the Drawings:

**Figure 1** is a graph showing the relationship between irradiation time and either particle diameter (nm) or polymer yield (mg).

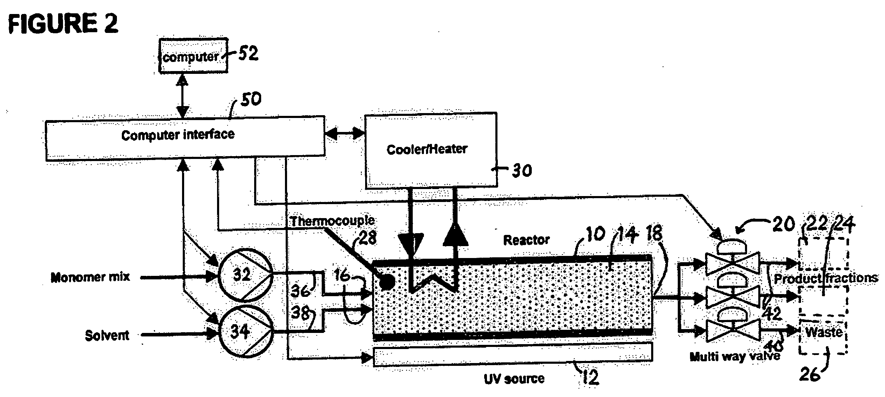

**Figure 2** is a schematic view of a photoreactor used for the synthesis of MIP nanoparticles.
**Figure 3** is an SEM image of MIP nanoparticles produced in the photoreactor.

### Detailed Description

The present invention is a synthetic process, generally carried out in a photoreactor. Specifically, one aspect of the present invention relates to the synthesis of MIPs in the photoreactor by controlled polymerisation, optionally controlled living radical polymerisation (LRP) in the presence of an immobilised template which can be a biological receptor, nucleic acid, cell, spore, virus, microorganism, tissue sample, carbohydrate, oligosaccharide, polysaccharide, peptide, nucleoprotein, mucoprotein, lipoprotein, synthetic protein, glycoprotein, glucosaminoglycan, steroid, hormone, immunosuppressant, heparin, antibiotic, vitamin, biomarker of a pathological or disease state, toxin, pesticide, herbicide, explosive, nerve agent, pollutant, endocrine disrupting compound, nucleotide, nucleoside, oligonucleotide, metabolite, secondary metabolite, drug metabolite, drug intermediate or drug or other class of template known to those skilled in the art. The template can be immobilised onto polymeric, polysaccharide or glass surfaces, for example in the form of beads, the surface of waveguides, fibres, including optical fibres, membranes, capillaries or any other surface suitable for the intended application, as know to those skilled in the art.

Several different forms of controlled polymerisation may be employed in the present invention. They are all based on the ability to control the addition reaction at a level such that predominantly soluble nanoparticles are formed rather than continuous polymer layers or networks. In the example of living radical polymerisation, initiator molecules undertake reversible transformations by photochemical stimuli, reversibly transforming dormant species into reactive free-radicals or ions which act as chain propagators. For this condition to apply, the equilibrium constants of the reactions should favour formation of the dormant species and should allow rapid exchange between the dormant and propagating species. Thus the concentrations of the propagating species will be very low and their residence time very short, which reduces the probability of side reactions that lead to termination of the growing polymer chain. Examples of living polymerisation include nitroxide-mediated polymerisation (NMP), atom-transfer radical polymerisation (ATRP) and reversible addition-fragmentation chain-transfer polymerisation (RAFT). RAFT polymerisation is based on reversible addition-fragmentation chain transfer equilibrium, where there is an exchange between active and dormant species. The radicals generated in the initiation step will propagate by addition of ,monomer until a molecule, capable of acting as a chain transfer agent, is encountered, and to which they may add in a reversible fashion. Generally living polymerisation process allow for the use of iniferters (initiator transfer-agent terminator) which optionally can be made in conjunction with conventional initiators to confer a living nature on the polymerisation. Iniferters can be photo-iniferters bearing a dithiocarbamyl group or thermal-iniferters carrying carbon-carbon or azo groups (see e.g., ref. 14) or other types of compound known to those skilled in the art. The preferred kind of iniferters are those that yield different radicals, one carbon radical which is reactive and another less reactive radical, e.g., a dithiocarbamyl radical. The carbon radical, which is typically a benzyl radical, can react with unsaturated monomer to initiate polymerisation. The less reactive radical, for example dithiocarbamyl radical, can terminate the polymerisation by recombining with a growing polymer chain. However the product of termination can be further dissociated to a new propagating radical and terminator in response to continued application of the stimulus, e.g. UV irradiation (see e.g., ref. 15).

One advantage of living polymerisation in contrast to traditional radical polymerisation is that the former proceeds at a low rate and with no observable autoacceleration, while the latter frequently proceeds with a strong autoacceleration (see e.g., ref. 16). The present invention takes advantage of this by performing living polymerisation under conditions which favour the formation of polymers with relatively low molecular weight. Typically the reaction is stopped at an early stage to produce polymers with molecular weights of 500-1,000,000 Da.

The present invention facilitates the optimisation of the conditions of the reaction in order to generate particles with relatively small size. An important part of the process is the selection of an appropriate living initiator and optimisation of the conditions of the polymerisation reaction. Alternatively the rate of radical formation and propagation can be controlled by adding inhibitors of the reaction or chain transfer agents such as mercapto derivatives.

Living radical polymerisation initiators can be prepared from discrete organic molecules or from macromolecules. In reality, most compounds that contain a hydroxy, carboxylic or amino group can be converted into an initiator, and thus incorporated easily into the polymer. This can either be at the terminus of the polymer in the case of a mono-functional initiator, or in the middle of the polymer in the case of a multi-functional initiator.

The reaction conditions favouring formation of relatively low molecular weight polymers include, but are not limited to: (i) using stoichiometric ratio between initiator and monomers; (ii) cooling the reaction or removing the source of UV or other irradiation, which will terminate the formation of new propagating species at an early stage of the reaction; (iii) removal of the monomers from contact with the growing polymer chain e.g., by filtration or chromatography; (iv) adding inhibitors to the reaction; (v) performing polymerisation in very dilute solution; (vi) adding chain transfer agents. The preferable option would be removal of the source of irradiation or its interruption. Alternatively monomers and other reagents can be removed from the growing MIP attached to the immobilised template by elution. As a result of controlled living polymerisation, MIP particles can be formed within the size range 500-1,000,000 Da, which could exist in soluble or at least colloidal forms after separation from the immobilised template.

In the present invention, monomers which can be used for MIP preparation, including: vinyl monomers, allyl monomers, acetylenes, acrylates, methacrylates, acrylamides, methacrylamides, chloroacrylates, itaconates, trifluoromethylacrylates, derivatives of amino acids, nucleosides, nucleotides, and carbohydrates. Polymerisation may be performed in the presence or on the surface of particles containing double bonds. Cross-linking monomers are used to fix or stabilise the structure of the resulting polymer, so that it remains complementary to that of the template. Typical examples of cross-linkers suitable for the synthesis of MIPs include, but are not limited to, ethylene glycol dimethacrylate, trimethylolpropane trimethacrylate, divinylbenzene, methylene bisacrylamide, ethylene bisacrylamide and N,N'-bisacryloylpiperazine. The function of cross-linking agents can be performed by particles or precursor polymers containing double bonds, or particles or polymers with multiple functionalities attached which can bind to functional monomers. Those skilled in the art could select monomers and cross-linkers suitable for a particular system. Alternatively a variety of combinatorial and computational methods could be used to assist in this selection.

The synthesised nanoparticles have higher affinity to the immobilised template than monomers, non-specific oligomers and low affinity polymers (e.g. those formed in the bulk volume in the absence of template). Thus in one aspect of the proposed invention weakly bound material is removed from the nanoparticles attached to the immobilised template by washing. The separation of high-affinity nanoparticles from immobilised template may be achieved by heating, which disrupts complex formation, by changing solution pH, changing ionic strength, or through the addition of urea, guanidine, or other substance or substances which interact with the template more strongly than does the polymer.

The process of the present invention is preferably carried out using a reactor which provides a suitable and controlled environment for the synthesis of MIP nanoparticles. It suitably includes a fluidic system comprising fluid reservoirs, pumps, valves, tubing, frits and connectors for delivering monomers and solvents, and for elution of by-products, unreacted materials and for collection of the synthesised nanoparticles. Optionally the delivery of reagents, washing and elution processes, as well as the temperature inside the reactor and the irradiation time are controlled by computer. One non-restricting example of such reactor is presented in Figure 1.

The reaction vessel 10 can be made from glass, quartz, or plastic, or a combination of two or more of these materials, provided that the transparency to light at the required wavelength is adequate to initiate polymerisation within the vessel. The path for light to enter the reactor vessel can be from one direction or from all directions; alternatively the light source 12 may be located inside the reaction vessel or in a transparent compartment within the reaction vessel or light may be channeled into the reaction vessel through one or more optical fibres or waveguides. In cases where the light source 12 is located inside the reaction vessel 10 or in a transparent compartment within the reaction vessel or light may be channeled into the reaction vessel through one or more optical fibres or waveguides, there "is no general requirement for the reactor vessel to be transparent, apart from the desirability to be able to visually inspect the reactor contents, so a broader range of materials, including metal, ceramic, fibre-reinforced composites, PTFE or other non-transparent materials may be used.

The polymerisation is initiated by irradiation, preferably by irradiation with UV or visible light and normally takes minutes or hours depending on the reactivity of the species. The light initiates radical formation and propagates polymerisation reaction. The light energy utilized in the present invention is ultraviolet ("UV") light or visible light. However, the light energy can also be broad-band, delivered by fiber optic cable or by the way of an attenuated total reflectance (ATR) link. In this regard, the photoreactor in FIG. 1 includes a transparent window or wave guide for the entry of light energy from a light source such as e.g. an ultraviolet lamp. The irradiation can also be delivered from the inside of the reaction through fiber optic cable or waveguide.

The photoreactor vessel 10 is designed to contain a solid phase 14 bearing an immobilized template. The solid phase 14 can be in the form of beads (packed, or loosely filled), membranes or fibres. The beads could be stationary or stirred for the duration of some or all of the MIP manufacturing process. The reactor vessel contains one or more entry ports 16, each optionally fitted with a non-return valve and frit for retaining the solid phase within the reactor vessel, for the delivery of monomers and washing solvents and an exit port 18, optionally fitted with a non-return valve and frit for retaining the solid phase within the reactor vessel, for elution of reagents, unreacted monomers and synthesized nanoparticles, connected through a switching valve 20 to direct the flow to an appropriate collection reservoir 22, 24, 26 for waste or product collection. The operation and use of this equipment is more particularly described below.

The monomer mixture, comprising functional monomer or monomers, iniferter, cross-linker or cross-linkers and optional chain-transfer agent or chain-transfer agents, dissolved in an appropriate solvent, said monomer mixture having been selected in order to optimize template-monomer interactions, is injected into the reactor vessel which contains immobilized template, as defined above. The polymerisation process is started when the reaction vessel contents reaches a predetermined temperature, preferably a low temperature (typically between -20 °C and +20 °C) by irradiation of the vessel contents with UV or with visible light. The nanoparticles are formed in solution and on the surface bearing the immobilized template. The reaction is terminated by ceasing irradiation. The unreacted monomers, partially-formed polymers and particles with low affinity to the template are then removed by washing with a wash solvent which can be the same as or different to the one used in the monomer mixture. The flow of effluent from the column comprising the washings is directed by the switching valve to a suitable waste reservoir (26). The temperature of the reaction vessel is increased to between 20 °C to 40 °C, at which point the low affinity MIP nanoparticles are eluted by continued flow of the wash solvent. Finally the desired high-affinity MIP nanoparticles are collected by increasing the reaction vessel temperature to between 60 °C to 80 °C and elution of the vessel contents with an elution solvent, which can be the same solvent as the wash solvent or a different solvent, optionally containing one or more compounds as additives in order to facilitate elution of the nanoparticles. The flow of the eluted nanoparticle-containing solvent is directed by the switching valve to a suitable vessel or vessels 22, 24 for collection of the product or products of reaction. The elution of nanoparticles can also be facilitated and/or controlled by changing the pH of the elution solvent or through the addition of acidic, basic or surface-active compounds or through the addition of compounds which otherwise disrupt binding between the template and MIP nanoparticles. A convenient way to monitor the temperature within the reaction vessel is by the use of one or more thermocouples 28. The heating and cooling of the monomer mixture in the reactor can be achieved using thermostatic control (optionally with circulating liquid) 30 or by using Peltier elements.

The benefits coming from this approach are numerous, including the possibility to reuse immobilised template for MIP synthesis, the possibility to fractionate MIPs with high affinity from low affinity particles and unreacted monomers, easy removal of the synthesised MIPs from the template, the ability to post-functionalise MIPs while still attached to the immobilised template, the ability to fully or partially automate the manufacturing process etc. Other benefits of the invention should be evident to those skilled in the art.

In one preferred type of embodiment of the present invention, separation and purification of the synthesised MIP nanoparticles is achieved on the same solid phase bearing immobilised template as is used for the imprinting process. The separation relies on affinity interactions between the synthesised MIP nanoparticles and the immobilised template molecules. The particles with low affinity could be removed from the solid phase by washing under mild conditions (optionally at a temperature of between -20 °C to +40 °C and in the absence of complex-disrupting agents, pH changes etc). The specific MIP nanoparticles with strong affinity to the template can be removed for collection at elevated temperature, by changing pH or by the use of complex-disrupting agents or solvents or combinations of mixtures thereof.

The synthesised high-affinity MIP nanoparticles may be purified additionally by chromatography, filtration and/or electrophoresis. The separation of the synthesised polymer can be achieved by affinity chromatography, or selective elution, when binding of the nanoparticles to the same or a similar immobilised template or target compound is used for the purification of a fraction of polymer particles with the highest affinity to the template, and/or by gel permeation chromatography (size-exclusion chromatography) which enables polymer fractions of different size to be separated. Fractionation, separation and purification during affinity separation is achieved by washing and elution using buffers with different pH, ionic strength, or through the addition of acids, bases, surface-active agents, urea, guanidine, or other substance or substances which interact with the template more strongly than does the polymer. Alternatively fractionation of particles with high affinity can be achieved by filtration, electrophoresis, chromatographic separation, washing, centrifugation or dialysis. Affinity chromatography is in particular a powerful tool, and is particularly preferred, because it allows for the preparation of MIPs with a narrow distribution of affinities to the template.

Affinity separation can additionally be used to select a subfraction of particles with high-affinity for the target or template structure, but which have low affinity for one or more interferent compounds by the selection of a fraction which binds to the former but not to the latter. Additionally subfractions can be selected which have broad or class-specific binding properties by selecting fractions with high-affinity for the target or template structure, but which also show high-affinity for one or more structural analogues of the template or target, comprising representative examples of the class of compounds for which binders are required.

Embodiments of the present invention may also include post-modification of the synthesised nanoparticles. The synthesised MIP nanoparticles can be modified with another polymer or polymers, linear or cross-linked, or be modified with a compound or compounds bearing specific functional group or groups with the intention of introducing one or more specific properties to the MIPs in order to modify their solubility characteristics or biocompatibility, to facilitate their extraction or other form of separation, to enable their detection, to introduce additional recognition or catalytic functionality, including but not limiting to a second molecular imprinting step, attachment of cyclodextrin, crown-ether, calixarene, or curcubituril or other supramolecular binding or catalytic groups, to attach dye molecules, optionally fluorescent dyes, metal-binding ligands, pro-drugs, antibiotics, immunostimulating agents, bioligands etc., preferably by re-activation of surface-bound iniferter groups or by their selective chemical modification, preferably while the MIP nanoparticles are still bound to the immobilised template phase. An example of this could be the formation of linear polymers of one or more hydrophobic monomers, such that hydrophobic "tails" are formed which would allow, e.g., extraction of the polymer from aqueous solution by organic solvent or location of the MIP nanoparticle at an aqueous-organic interface. It would be possible to introduce specific binding groups, e.g., biotin, which would allow selective removal of the polymer by an affinity adsorbent or to enable binding to the surface of a biosensor, such as a surface plasmon resonance (SPR) sensor device or an acoustic sensor, an electrode or any other sensor device know to those skilled in the art. Those skilled in the art will be familiar with the wealth of experimental protocols which allow this modification and corresponding separation to be performed. Preferably the modification is achieved in the photoreactor vessel directly on the surface while the polymer is bound to immobilised template or separately or after additional separation and/or purification steps have been performed, as described in the previous example.

In one aspect, the present invention relates to sequential polymerisation when the imprinted polymer is modified with other types of molecules in order to change the properties or functions of the synthesised particles. It has been mentioned already that the MIP nanoparticles can be modified with another polymer or functional group to facilitate its separation. One important property of living polymerisation is the ability to stop a reaction and continue it later by simply stopping and re-applying e.g., UV irradiation of the reaction mixture. The end of the growing polymer chain contains an initiator species which can be re-activated to initiate a new round of polymerisation. Thus the dormant polymer chain ends could be exposed to another monomer or monomer mixture and the polymerisation continued, resulting in the formation of linear or cross-linked polymers or copolymers grafted to the surface of the cross-linked nanoparticle, additionally two or more monomer solutions can be introduced and irradiated sequentially in order to graft block copolymer architectures. The new monomer or monomers can introduce new functionalities into the polymer particles. Thus in addition to the affinity to the first template, provided by the first MIP, an extended polymer could be produced with affinity to a second template introduced into the system or with catalytic functionality by imprinting a transition state analogue. The extended graft polymer, copolymer or block copolymer could have fluorescent tags attached to end groups which would be useful in diagnostics. Other types of modification are also possible which would introduce other functionalities such as the ability to generate active species with biocidal properties, catalytic groups, isotopic labels, groups useful for immobilisation, sensing, imaging (e.g. contrast agents) etc. These functionalities could also be introduced into the polymer by using the correspondingly functionalised initiator. The modification can be achieved directly on the surface while the particle is bound to immobilised template or separately or after additional separation and/or purification steps have been performed, as described in the previous example.

The present invention also concerns applications of the synthesised nanoparticles. These include applications of the synthesised particles as drugs in pharmacology and medicine, as receptor-specific ligands in analytical chemistry (sensors, assays), for separations in biotechnology, pharmacology and the food industry and as catalysts. The soluble nature of the synthesised polymers makes them ideal candidates for use as drugs. The selective binding to an enzyme, receptor or other biological molecule could be used to affect biological functions of these molecules. Thus MIPs synthesised by living polymerisation could be used *in vivo* for modulation of biological processes.

The polymers prepared as described in the present invention resemble effectors (activator, inhibitor or substrate) of the template, and as such can have biological activity if the template is involved in a physiological process or an effective analogue of such a molecule or structure. Such polymers can be used, for example, as drugs in pharmacology and medicine.

When bound to isotopes or fluorescent tags, MIPs could be used as selective contrast agents or in other forms of diagnostics. MIPs integrated with ligands capable of producing in certain conditions e.g., singlet molecular oxygen, could be used as selective biocidal agents. A variety of other modifications could be proposed by those skilled in the art to introduce antibiotic properties into MIPs prepared by living polymerisation.

The synthesised MIPs could be used as a substitute for natural antibodies and receptors in different forms of assays and sensors. Several features make MIPs prepared by living polymerisation particularly attractive objects for application in sensors. Thus the synthesised MIPs still contain initiator which can be used to form radicals useful for covalent attachment of polymers to the solid surfaces with e.g. double bond containing functionalities. Thus simple UV irradiation might be sufficient to bind MIPs to surfaces covered with double bonds.

The ability to use affinity chromatography to separate MIP preparations into several fractions with different affinities could be advantageous for the preparation of sensors/assays with varying detection ranges. For some applications Blank polymers (those prepared in the same way as MIPs, but in the absence of any template) prepared by living polymerisation could also be used. It would be necessary however to prepare such polymers using monomers which possess certain affinity or other properties necessary for this particular application. Those skilled in the art know how to select such monomers by using e.g. computational or combinatorial approaches. It is necessary to clarify that using both MIPs and Blank polymers prepared in a fashion as described in the corresponding embodiments are covered by the scope of the present invention.

The present invention will now be further described particularly with reference to the following non-limiting examples.

### EXAMPLES

### Example 1.

**Preparation of template-derivatised solid support.** Glass beads were activated by boiling in NaOH 4 M for 10 minutes, then washed with double-distilled water and acetone and dried at 80°C. The beads were then incubated in a 2% v/v solution of 3-aminopropyl trimethoxysilane in toluene overnight, washed with acetone and subsequently incubated in a 7% v/v solution of glutaraldehyde in PBS buffer pH 7.2 for 2 hours, after which they were rinsed with double-distilled water. The surface immobilisation of the template was performed by incubating the beads in a 5 mg/ml solution of the template in PBS pH 7.2 overnight at 4°C. Methylpyrrolidone (10% v/v) was also added as co-solvent during the immobilisation of melamine. The glass beads were washed with water and dried under vacuum, then stored at 4°C until use.

**Automated synthesis of imprinted particles with specificity towards melamine.** The synthesiser used consisted of two pumps 32, 34 delivering up to eight separate feed lines to a temperature controlled glass reaction vessel 10 (reactor, Figure 1) packed with the template-derivatised solid support 14. One line 36 was used to supply the monomer mixture, the remaining 38 were used for the delivery of wash and elution solvents. The outlet 18 of said reactor 10 was connected to a multi-way valve 20 with six outlets (only three of which are shown in Fig. 1) and used as a fraction collector, one line 40 used for waste fractions, the remaining 42 were connected to collection vials 22, 24. A UV source 12 comprising four mercury vapour lamps of 8 W placed at 20 cm from the reactor was used to initiate the polymerisation. The pumps, temperature controller 30, UV lamps and multi-way valve were connected to a computer interface 50 and were computer-controlled by programmable software in a computer 52. The software allows the control of flow rates, selection of feed lines, reactor temperature, irradiation timing/times, reactor elution time and multi-way valve settings. For the synthesis of the imprinted polymer particles the melamine-coated beads (23.5 g) were packed into the temperature controlled glass reactor. The following steps were all programmed into the control software and the synthesiser operated in automatic mode. The reactor was filled with solvent (acetonitrile) delivered by a computer-controlled pump 34 at 2 ml/min. The column was cooled down to 4 °C and 4 ml of monomer mixture injected onto the column from a different feed line 36. The composition of the monomer mixture was (in % w/w): Acetonitrile 50.5 %, ethylene glycol dimethacrylate (EGDMA) 15.5 %, trimethylolpropane trimethacrylate (TRIM) 15.5 %, methacrylic acid (MAA) 13.8 %, benzyl diethyldithiocarbamate (INIFERTER) 3.7 %, pentaerythritol tetrakis(3-mercaptopropionate) (CTA) 0.86 %. Pumps were switched off and polymerisation was initiated by UV irradiation which lasted 3.5 min. Afterwards the solvent pump 34 was switched on in order to elute unreacted monomers and particles with poor or no affinity for the template during 30 min at a flow rate of 2 ml/min and 4 °C. The temperature of the column was then increased to 25 °C and the solvent switched to acetonitrile:formic acid 10 mM and run at a flow rate of 2 ml/min during 11 min. Finally, to elute particles with high affinity for the template, the temperature was raised to 60 °C and particles were collected during 20 min at a flow rate of 2 ml/min.

**EXAMPLE 2. Automated synthesis of imprinted particles with specificity towards vancomycin.** For the synthesis of imprinted polymer particles, glass beads (23.5 g) coated with vancomycin were prepared generally as described in Example 1, and loaded into the temperature controlled glass reactor. The setup used was as described in Example 1. The following steps were all programmed into the control software and the synthesiser operated in automatic mode. The reactor was filled with solvent (acetonitrile) delivered by a computer-controlled pump. The column was cooled down to 4 °C and 4 ml of monomer mixture injected onto the column from a different feed line. The composition of the monomer mixture was (in % w/w): Acetonitrile 79 %, N-isopropylacrylamide (NIPAm) 10%, N-tert-butylacrylamide (TBAm) 8.5 %, benzyl diethyldithiocarbamate (INIFERTER) 1.62 %, *N,N'-*methylenebisacrylamide (BIS) 0.5 %. The polymerisation was initiated by UV irradiation which lasted 3.5 min. Afterwards the solvent pump was switched on in order to elute unreacted monomers and particles with poor or no affinity for the template during 30 min at a flow rate of 2 ml/min and 25 °C. The temperature of the column was then increased to 60 °C to elute particles with high affinity for the template which were collected during 20 min at a flow rate of 2 ml/min.

## Claims

1. A process for producing nanoparticles of molecularly imprinted polymers comprising:
(i) immobilising a template species on a solid support to provide a supported template material;
(ii) locating the supported template material in a reaction vessel having one or more flow inlets, one or more flow outlets, a cooler/heater adapted to affect the temperature of the vessel's contents, and a radiation source adapted to irradiate the vessel's interior;
(iii) passing a polymerisable composition into the vessel through one or more of said flow inlets;
(iv) causing the radiation source to irradiate the vessel's interior to effect controlled polymerisation of the polymerisable composition, while using the cooler/heater to control the temperature thereof;
(v) ceasing irradiation at a stage when polymerisation has generated nanoparticles with molecular weights in the range 500-1,000,000 Da, at least some of the nanoparticles being bound to the immobilised template;
(vi) passing solvent through the vessel via one or more of said inlets and one or more of said outlets to wash out unreacted components of the polymerisable composition and unbound polymers; and
(vii) passing solvent through the vessel via one or more of said inlets and one or more of said outlets under conditions such that at least some of said bound nanoparticles are separated from the immobilised template and passed out of the vessel to a collection vessel, said conditions comprising one or more of increased temperature produced by the cooler/heater, and use of a solvent composition that is able to disrupt binding of nanoparticles to template.

2. A process of claim 1 wherein step (vii) comprises a first step (a) in which conditions are selected so that nanoparticles bound relatively loosely to template are separated and passed out to a first said collection vessel; and a second step (b) in which conditions are selected so that more tightly bound nanoparticles are separated and passed out to a second collection vessel.

3. A process of claim 2 wherein the polymerisation step (iv) is carried out with control of the temperature in the range -20 to +20°; said first step (vii) (a) is carried out with control of the temperature in the range 20 to 40°; and said second step (vii)(b) is carried out with control of the temperature in the range 60 to 80°.

4. A process according to any preceding claim wherein steps (iii) to (vii) are carried out under computer control.

5. A process according to claim 4 wherein the polymerisation conditions are controlled to produce particles of mean diameter 40-100 nm.

6. A process according to claims 4 or 5 wherein the polymerisation conditions are controlled to produce particles whereof at least 50% have diameters in the range 40-100 nm.

7. A process of any preceding claim wherein the polymerisation is iniferter-based living radical polymerisation.

8. A process according to any preceding claim including a subsequent step of re-binding nanoparticles separated in step (vii) to immobilised template and subsequently separating them therefrom.

9. A process according to any preceding claim including a subsequent step of subjecting the separated nanoparticles to further polymerisation to graft block copolymer segments onto them.

10. A process according to any preceding claim including a subsequent step of using the separated nanoparticles as a drug, as a receptor-specific ligand for analysis or separation, or as a catalyst.

## Patentansprüche

1. Verfahren zum Herstellen von Nanopartikeln aus molekular geprägten Polymeren, Folgendes umfassend:
(i) das Immobilisieren einer Matrizenspezies auf einem festen Träger, um ein getragenes Matrizenmaterial bereitzustellen;
(ii) Positionieren des getragenen Matrizenmaterials in einem Reaktionsgefäß, das einen oder mehrere Flusseinlässe, einen oder mehrere Flussauslässe, einen Kühler/Erhitzer, der angepasst ist, um die Temperatur des Gefäßinhalts zu beeinflussen, und eine Strahlungsquelle, die angepasst ist, das Innere des Gefäßes zu bestrahlen, aufweist;
(iii) Einleiten einer polymerisierbaren Zusammensetzung durch einen oder mehrere der Flusseinlässe in das Gefäß;
(iv) Veranlassen der Strahlungsquelle, das Innere des Gefäßes zu bestrahlen, um gesteuerte Polymerisation der polymerisierbaren Zusammensetzung herbeizuführen, während der Kühler/Erhitzer verwendet wird, um dabei die Temperatur zu regeln;
(v) Stoppen der Bestrahlung an einem Punkt, wenn durch die Polymerisation Nanopartikel mit Molekulargewichten im Bereich von 500-1.000.000 Da erzeugt wurden, wobei zumindest manche der Nanopartikel an die immobilisierte Matrize gebunden sind;
(vi) Hindurchleiten von Lösungsmittel über einen oder mehrere Einlässe und einen oder mehrere Auslässe durch das Gefäß, um nichtumgesetzte Komponenten der polymerisierbaren Zusammensetzung und ungebundene Polymere auszuwaschen; und
(vii) Hindurchleiten von Lösungsmittel über einen oder mehrere Einlässe und einen oder mehrere Auslässe durch das Gefäß unter solchen Bedingungen, dass zumindest manche der gebundenen Nanopartikel von der immobilisierten Matrize abgelöst werden und aus dem Gefäß in ein Sammelgefäß geleitet werden, wobei die Bedingungen eine oder mehrere aus durch den Kühler/Erhitzer erzeugter erhöhter Temperatur und Verwendung einer Lösungsmittelzusammensetzung, die in der Lage ist, die Bindung von Nanopartikeln an die Matrize aufzubrechen, umfassen.

2. Verfahren nach Anspruch 1, worin Schritt (vii) einen ersten Schritt (a), in dem Bedingungen so gewählt werden, dass Nanopartikel, die relativ lose an die Matrize gebunden sind, abgelöst und in das erste Sammelgefäß geleitet werden; und einen zweiten Schritt (b), in dem Bedingungen so gewählt werden, dass fester gebundene Nanopartikel abgelöst und in ein zweites Sammelgefäß geleitet werden, umfasst.

3. Verfahren nach Anspruch 2, worin der Polymerisationsschritt (iv) unter Regelung der Temperatur im Bereich von -20 bis +20 ° durchgeführt wird; der erste Schritt (vii) (a) unter Regelung der Temperatur im Bereich von 20 bis 40 ° durchgeführt wird; und der zweite Schritt (vii) (b) untrer Regelung der Temperatur im Bereich von 60 bis 80 ° durchgeführt wird.

4. Verfahren nach einem der vorangegangenen Ansprüche, worin die Schritte (iii) bis (vii) computergesteuert ausgeführt werden.

5. Verfahren nach Anspruch 4, worin die Polymerisationsbedingungen so gesteuert werden, dass Partikel mit einem mittleren Durchmesser von 40-100 nm erzeugt werden.

6. Verfahren nach Anspruch 4 oder 5, worin die Polymerisationsbedingungen so gesteuert werden, dass Partikel erzeugt werden, von denen zumindest 50 % einen Durchmesser im Bereich von 40-100 nm aufweisen.

7. Verfahren nach einem der vorangegangenen Ansprüche, worin die Polymerisation Iniferter-basierte, lebende radikalische Polymerisation ist.

8. Verfahren nach einem der vorangegangenen Ansprüche, umfassend einen nachfolgenden Schritt des erneuten Bindens von Nanopartikeln, die in Schritt (vii) abgelöst wurden, an die immobilisierte Matrize und des anschließenden Ablösens derselben davon.

9. Verfahren nach einem der vorangegangenen Ansprüche, umfassend einen nachfolgenden Schritt des Unterziehens der abgelösten Nanopartikel einer weiteren Polymerisation, um Blockcopolymersegmente darauf aufzupfropfen.

10. Verfahren nach einem der vorangegangenen Ansprüche, umfassend einen nachfolgenden Schritt des Verwendens der abgelösten Nanopartikel als Medikament, als rezeptorspezifischen Liganden zur Analyse oder Trennung oder als Katalysator.

## Revendications

1. Procédé de production de nanoparticules de polymères à empreinte moléculaire comprenant :
(i) l'immobilisation d'une espèce de matrice sur un support solide pour produire un matériau de matrice sur support ;
(ii) la localisation du matériau de matrice sur support dans une cuve de réaction ayant une ou plusieurs entrées d'écoulement, une ou plusieurs sorties d'écoulement, un refroidisseur/chauffage adapté pour affecter la température du contenu de la cuve, et une source de rayonnement adaptée pour irradier l'intérieur de la cuve ;
(iii) le passage d'une composition polymérisable dans la cuve par l'intermédiaire d'une ou plusieurs desdites entrées d'écoulement ;
(iv) la commande de la source de rayonnement pour irradier l'intérieur de la cuve pour effectuer la polymérisation contrôlée de la composition polymérisable, tout en utilisant le refroidisseur/chauffage pour réguler la température de celle-ci ;
(v) l'arrêt de l'irradiation à un stade lorsque la polymérisation a généré des nanoparticules avec des poids moléculaires dans la plage de 500 à 1 000 000 Da, au moins une partie des nanoparticules étant liées à la matrice immobilisée
(vi) le passage du solvant à travers la cuve par l'intermédiaire d'une ou plusieurs desdites entrées et une ou plusieurs desdites sorties pour laver les composants n'ayant pas réagi de la composition polymérisable et les polymères non liés ; et
(vii) le passage du solvant à travers la cuve par l'intermédiaire d'une ou plusieurs desdites entrées et une ou plusieurs desdites sorties dans des conditions de sorte qu'au moins une partie desdites nanoparticules liées sont séparées de la matrice immobilisée et transférées de la cuve vers une cuve de collecte, lesdites conditions comprenant une ou plusieurs d'une température augmentée produite par le refroidisseur/chauffage, et l'utilisation d'une composition de solvant qui est capable de rompre la liaison des nanoparticules à la matrice.

2. Procédé de la revendication 1 dans lequel l'étape (vii) comprend une première étape (a) dans laquelle des conditions sont sélectionnées de sorte que des nanoparticules liées de façon relativement faible à la matrice soient séparées et transférées dans une première dite cuve de collecte ; et une deuxième étape (b) dans laquelle des conditions sont choisies de sorte que les nanoparticules liées de façon plus forte soient séparées et transférées dans une deuxième cuve de collecte.

3. Procédé de la revendication 2 dans lequel l'étape de polymérisation (iv) est conduite avec régulation de la température dans la plage de -20 à +20° ; ladite première étape (vii)(a) est conduite avec régulation de la température dans la plage de 20 à 40° et ladite deuxième étape (vii)(b) est conduite avec régulation de la température dans la plage de 60 à 80°.

4. Procédé selon l'une quelconque des revendications précédentes dans lequel les étapes (iii) à (vii) sont conduites sous commande informatique.

5. Procédé selon la revendication 4 dans lequel les conditions de polymérisation sont contrôlées de manière à produire des particules ayant un diamètre moyen de 40 à 100 nm.

6. Procédé selon les revendications 4 ou 5 dans lequel les conditions de polymérisation sont contrôlées pour produire des particules dont au moins 50 % ont des diamètres dans la plage de 40 à 100 nm.

7. Procédé de l'une quelconque des revendications précédentes dans lequel la polymérisation est une polymérisation radicalaire réactive à base d'iniferter.

8. Procédé selon l'une quelconque des revendications précédentes comprenant une étape consécutive de re-liaison des nanoparticules séparées dans l'étape (vii) à la matrice immobilisée et ensuite leur séparation.

9. Procédé selon l'une quelconque des revendications précédentes comprenant une étape consécutive de soumission des nanoparticules séparées à une polymérisation supplémentaire en segments de copolymère séquencé greffé sur celles-ci.

10. Procédé selon l'une quelconque des revendications précédentes comprenant une étape consécutive d'utilisation des nanoparticules séparées en tant que médicament, en tant que ligand récepteur-spécifique pour analyse ou séparation, ou en tant que catalyseur.
